# EUROPEAN PATENT APPLICATION

(11) **EP 4 592 233 A1**
(43) Date of publication of application: **30.07.2025**
(21) Application number: 24223452.4
(22) Date of filing: 27.12.2024
(51) Int. Cl.: B65H 33/10, B65H 29/66

(54) **SHEET BUNDLE TRANSPORT APPARATUS AND CONTROL METHOD OF SHEET BUNDLE TRANSPORT APPARATUS**

(30) Priority: 26.01.2024 JP 2024010197
(71) Applicant: Horizon Inc., Takashima-shi, Shiga 520-1501 (JP)
(72) Inventor: Kashiba, Masayuki, Takashima-shi, Shiga, 520-1501 (JP); Nakashima, Takatou, Takashima-shi, Shiga, 520-1501 (JP)
(74) Representative: Petraz, Gilberto Luigi

(57) **Abstract**

Provided is the sheet bundle transport apparatus 100 including: a first transport unit; a second transport unit; an abutment unit 23 that performs switching between an abutment state where an end of a sheet bundle B is abutted against an abutment member 23a at a predetermined position Xp in the transport direction TD and a non-abutment state; a first press unit 21 that presses the sheet bundle against the first transport unit; a second press unit that presses the sheet bundle against the second transport unit; and a press switching unit 24 that performs switching between a first press state where the first press unit 21 and the second press unit press the sheet bundle B in a predetermined region Ap located upstream from the predetermined position Xp in the transport direction TD and a second press state where the first press unit 21 does not press the sheet bundle in the predetermined region Ap; and a control unit that controls the abutment unit 23 and the press switching unit 24 to switch the non-abutment state to the abutment state and switch the first press state to the second press state so as to change an angle relative to the width direction of a predetermined sheet bundle B.

## Description

### BACKGROUND

### 1. TECHNICAL FIELD

The present invention relates to a sheet bundle transport apparatus and a control method of a sheet bundle transport apparatus.

### 2. DESCRIPTION OF RELATED ART

Sheet bundle transport apparatus that transport sheet bundles bound or bound and folded by a book binding machine with the sheet bundles half-overlapping are conventionally known (Japanese Patent Application Laid-Open No. H9-278267).

The art of Japanese Patent Application Laid-Open No. H9-278267 moves a pin to be projected downward every time a preset quantity of the transported sheet bundles is reached and brings an end face of the sheet bundles into contact with the pin to delay the transport motion. Accordingly, the orientation of a sheet bundle is angled with respect to the flow direction of sheet bundles, and this makes it possible to distinguish the angled sheet bundle from other sheet bundles and divide the sheet bundles from each other.

In the art of Japanese Patent Application Laid-Open No. H9-278267, a sheet bundle angled with respect to the flow direction due to contact with the pin is not pressed against a transport belt from above. When the end face of the sheet bundle comes into contact with the pin, the sheet bundle will move to any position in accordance with a transport speed, the size, or the like. Thus, when sheet bundles are divided, the orientation of the sheet bundles is unable to be stably rotated to a desired position, which may prevent suitable division of the sheet bundles.

The present invention has been made in view of the problem described above and intends to provide a sheet bundle transport apparatus and a control method of a sheet bundle transport apparatus that, when dividing a plurality of sheet bundles, can stably rotate the sheet bundles for division to have a desired orientation and perform suitable division of the sheet bundles.

### BRIEF SUMMARY

To solve the above problem, the present invention employs the following solutions.

A sheet bundle transport apparatus according to one aspect of the present invention includes: a first transport unit formed extending in a transport direction and configured to transport a plurality of sheet bundles in the transport direction; a second transport unit formed extending in the transport direction, arranged spaced apart from the first transport unit in a width direction orthogonal to the transport direction, and configured to transport the plurality of sheet bundles in the transport direction; an abutment unit arranged between the first transport unit and the second transport unit with respect to the width direction and configured to vertically move an abutment member to perform switching between an abutment state and a non-abutment state, the abutment state being a state where an end of a sheet bundle is abutted against the abutment member at a predetermined position in the transport direction, and the non-abutment state being a state where the end of the sheet bundle is not abutted against the abutment member at the predetermined position; a first press unit arranged above the first transport unit with the sheet bundle being interposed between the first transport unit and the first press unit and configured to press the sheet bundle against the first transport unit via a first rotating member that is rotatable about a first rotary shaft extending in the width direction; a second press unit arranged above the second transport unit with the sheet bundle being interposed between the second transport unit and the second press unit and configured to press the sheet bundle against the second transport unit via a second rotating member that is rotatable about a second rotary shaft extending in the width direction; a press switching unit configured to perform switching between a first press state and a second press state, the first press state being a state where the first press unit and the second press unit press the sheet bundle in a predetermined region located upstream from the predetermined position in the transport direction, and the second press state being a state where the first press unit does not press the sheet bundle in the predetermined region and the second press unit presses the sheet bundle in the predetermined region; and a control unit configured to control the abutment unit and the press switching unit to switch the non-abutment state to the abutment state and switch the first press state to the second press state so as to change an angle relative to the width direction of a predetermined sheet bundle out of the plurality of sheet bundles being continuously transported.

According to the sheet bundle transport apparatus of one aspect of the present invention, the abutment unit is set to the non-abutment state, the press switching unit is set to the first press state, thereby the first press unit presses the sheet bundle against the first transport unit in the predetermined region without the sheet bundle being abutted against the abutment member, and the second press unit presses the sheet bundle against the second transport unit in the predetermined region. Thus, each of the plurality of sheet bundles receives application of transport force toward the transport direction from the first transport unit and the second transport unit and is transported in the transport direction.

Further, according to the sheet bundle transport apparatus of one aspect of the present invention, the abutment unit is switched from the non-abutment state to the abutment state, the press mechanism is switched from the first press state to the second press state, and thereby the second press unit presses the sheet bundle against the second transport unit in the predetermined region with the sheet bundle being abutted against the abutment member. Since the sheet bundle abutted against the abutment member is pressed against the second transport unit by the second press unit, the sheet bundle is rotated about the abutment member by the transport force transferred from the second transport unit and stably rotated to a desired orientation.

As described above, according to the sheet bundle transport apparatus according to one aspect of the present invention, when the plurality of transported sheet bundles are divided, the sheet bundles for division can be stably rotated to a desired orientation to perform suitable division of the sheet bundles.

The sheet bundle transport apparatus according to one aspect of the present invention may be configured such that the first press unit has a pair of first press rollers and a first press belt stretched around the pair of first press rollers, and the second press unit has a pair of second press rollers and a second press belt stretched around the pair of second press rollers.

According to the sheet bundle transport apparatus of the present configuration, the transport force of the first transport unit is transferred to the first press belt via the sheet bundle pressed by the first press roller arranged downstream in the transport direction. The first press belt rotated by transport force of the first transport unit can apply transport force to the sheet bundle pressed by the first press roller arranged upstream in the transport direction.

Similarly, according to the sheet bundle transport apparatus of the present configuration, the transport force of the second transport unit is transferred to the second press belt via the sheet bundle pressed by the second press roller arranged downstream in the transport direction. The second press belt rotated by the transport force of the second transport unit can apply the transport force to the sheet bundle pressed by the second press roller arranged upstream in the transport direction.

The sheet bundle transport apparatus of the above configuration may be formed such that, in the first press state, the press switching unit forms a state where both of the pair of first press rollers press the sheet bundle via the first press belt, and in the second press state, the press switching unit forms a state where the first press roller arranged upstream in the transport direction does not press the sheet bundle and the second press roller presses, via the second press belt, the sheet bundle located upstream from the predetermined position in the transport direction at which the abutment member is arranged.

According to the sheet bundle transport apparatus of the present form, in the first press state, a state where both of the pair of first press rollers press the sheet bundle via the first press belt is formed, and thereby transport force can be applied to the plurality of sheet bundles from the first transport unit in the entire region between the pair of first press rollers in the transport direction. Further, in the second press state, a state where the first press roller arranged upstream in the transport direction does not press the sheet bundle and the second press roller presses, via the second press belt, the sheet bundle located upstream from the predetermined position in the transport direction at which the abutment member is arranged is formed, and thereby a state where the sheet bundle located upstream from the predetermined position in the transport direction at which the abutment member is arranged is suitably rotated about the abutment member can be formed.

The sheet bundle transport apparatus according to one aspect of the present invention may be configured to include a motion mechanism configured to move the abutment unit, the first press unit, and the second press unit in the transport direction while maintaining relative positions in the transport direction between the abutment unit, the first press unit, and the second press unit.

According to the sheet bundle transport apparatus of the present configuration, while maintaining the relative positions in the transport direction between the abutment unit, the first press unit, and the second press unit, it is possible to move these units to any position in the transport direction in accordance with the size or the like of the sheet bundle.

In a control method of a sheet bundle transport apparatus according to one aspect of the present invention, the sheet bundle transport apparatus has a first transport unit formed extending in a transport direction and configured to transport a plurality of sheet bundles in the transport direction, a second transport unit formed extending in the transport direction, arranged spaced apart from the first transport unit in a width direction orthogonal to the transport direction, and configured to transport the plurality of sheet bundles in the transport direction, an abutment unit arranged between the first transport unit and the second transport unit with respect to the width direction and configured to vertically move an abutment member to perform switching between an abutment state and a non-abutment state, the abutment state being a state where an end of a sheet bundle is abutted against the abutment member at a predetermined position in the transport direction, and the non-abutment state being a state where the end of the sheet bundle is not abutted against the abutment member at the predetermined position, a first press unit arranged above the first transport unit with the sheet bundle being interposed between the first transport unit and the first press unit and configured to press the sheet bundle against the first transport unit via a first rotating member that is rotatable about a first rotary shaft extending in the width direction, a second press unit arranged above the second transport unit with the sheet bundle being interposed between the second transport unit and the second press unit and configured to press the sheet bundle against the second transport unit via a second rotating member that is rotatable about a second rotary shaft extending in the width direction, and a press switching unit configured to perform switching between a first press state and a second press state, the first press state being a state where the first press unit and the second press unit press the sheet bundle in a predetermined region located upstream from the predetermined position in the transport direction, and the second press state being a state where the first press unit does not press the sheet bundle in the predetermined region and the second press unit presses the sheet bundle in the predetermined region, and the control method includes: a first switching step of controlling the abutment unit and the press switching unit to switch the non-abutment state to the abutment state and switch the first press state to the second press state so as to change an angle relative to the width direction of a predetermined sheet bundle out of the plurality of sheet bundles being continuously transported; and a second switching step of controlling the abutment unit and the press switching unit to switch the abutment state to the non-abutment state and switch the second press state to the first press state.

According to the control method of the sheet bundle transport apparatus of one aspect of the present invention, in the first switching step, the abutment unit is switched from the non-abutment state to the abutment state, the press mechanism is switched from the first press state to the second press state, and thereby the second press unit presses the sheet bundle against the second transport unit in the predetermined region with the sheet bundle being abutted against the abutment member. Since the sheet bundle abutted against the abutment member is pressed against the second transport unit by the second press unit, the sheet bundle is rotated about the abutment member by the transport force transferred from the second transport unit and stably rotated to a desired orientation.

According to the control method of the sheet bundle transport apparatus of one aspect of the present invention, in the second switching step, the abutment unit is switched from the abutment state to the non-abutment state, the press mechanism is switched from the second press state to the first press state, and thereby the first press unit presses the sheet bundle against the first transport unit in the predetermined region and the second press unit presses the sheet bundle against the second transport unit in the predetermined region without the sheet bundle being abutted against the abutment member. Thus, each of the plurality of sheet bundles receives application of transport force toward the transport direction from the first transport unit and the second transport unit and is transported in the transport direction.

As described above, according to the control method of the sheet bundle transport apparatus of one aspect of the present invention, when a plurality of transported sheet bundles are divided, the sheet bundles for division can be stably rotated to a desired orientation to perform suitable division of the sheet bundles.

### BRIEF DESCRIPTION OF THE SEVERAL VIEWS OF THE DRAWINGS

Fig. 1 is a plan view of a sheet bundle transport apparatus according to one embodiment of the present invention when viewed from above.
Fig. 2 is an arrow A-A view of the sheet bundle transport apparatus illustrated in Fig. 1.
Fig. 3 is an arrow B-B view of the sheet bundle transport apparatus illustrated in Fig. 1.
Fig. 4 is a perspective view of the sheet bundle transport apparatus illustrated in Fig. 1.
Fig. 5 is a partial enlarged view of the sheet bundle transport apparatus illustrated in Fig. 2 and illustrates a case where a non-abutment state and a first press state are applied.
Fig. 6 is a partial enlarged view of the sheet bundle transport apparatus illustrated in Fig. 2 and illustrates a case where an abutment state and a second press state are applied.
Fig. 7 is a plan view of the sheet bundle transport apparatus according to one embodiment of the present invention when viewed from above and illustrates a case where the non-abutment state and the first press state are applied.
Fig. 8 is a plan view of the sheet bundle transport apparatus according to one embodiment of the present invention when viewed from above and illustrates a case where the abutment state and the second press state are applied.
Fig. 9 is a flowchart illustrating a control method of the sheet bundle transport apparatus according to one embodiment of the present invention.

### DETAILED DESCRIPTION

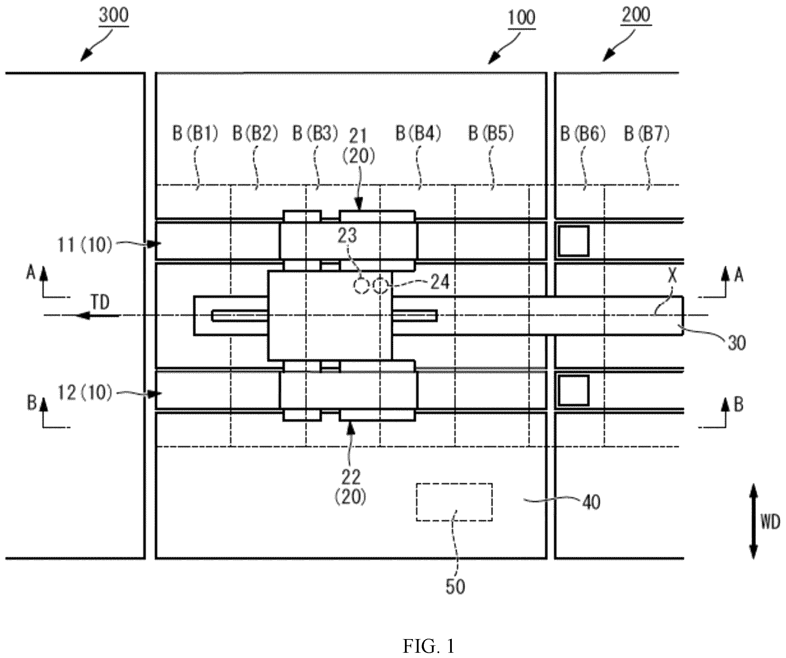

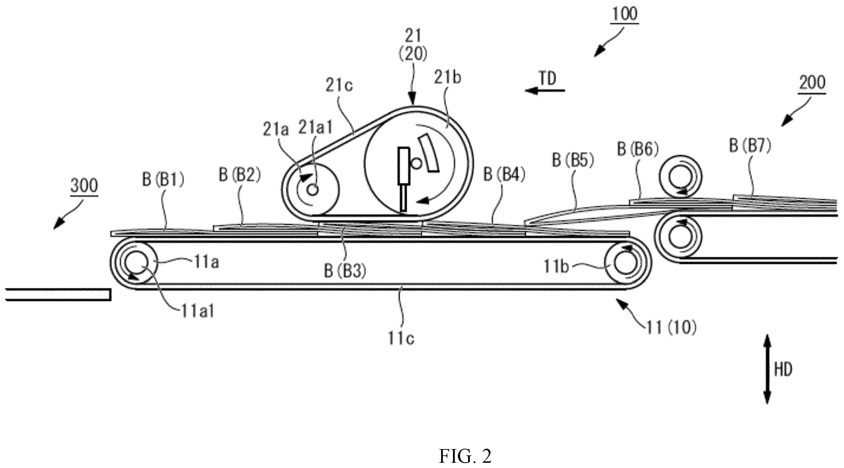

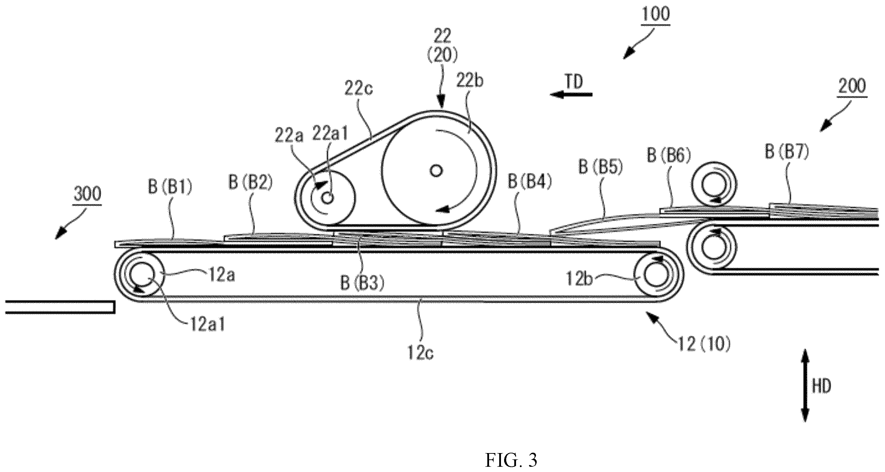

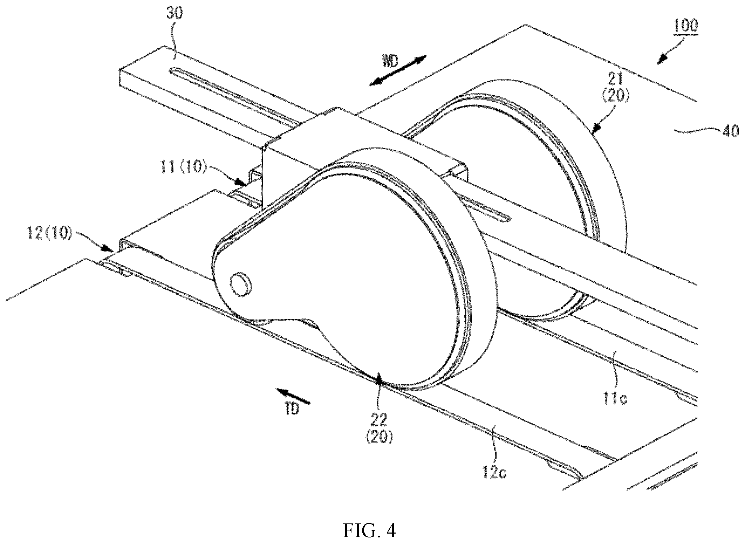

A sheet bundle transport apparatus 100 according to one embodiment of the present invention will be described below with reference to the drawings. Fig. 1 is a plan view of the sheet bundle transport apparatus 100 according to one embodiment of the present invention when viewed from above. Fig. 2 is an arrow A-A view of the sheet bundle transport apparatus 100 illustrated in Fig. 1. Fig. 3 is an arrow B-B view of the sheet bundle transport apparatus 100 illustrated in Fig. 1. Fig. 4 is a perspective view of the sheet bundle transport apparatus 100 illustrated in Fig. 1.

The sheet bundle transport apparatus 100 of the present embodiment is an apparatus that transports a plurality of sheet bundles B in a transport direction TD with the sheet bundles B partially overlapping each other in the transport direction TD. The sheet bundle transport apparatus 100 accepts the plurality of sheet bundles B carried in from a sheet bundle carry-in apparatus 200 arranged upstream in the transport direction TD and discharges the sheet bundles B to a sheet bundle accumulation apparatus 300 arranged downstream in the transport direction TD.

Fig. 1 to Fig. 3 illustrate states where sheet bundles B1, B2, B3, B4, B5, B6, B7 are transported from the sheet bundle carry-in apparatus 200 to the sheet bundle transport apparatus 100 with these sheet bundles partially overlapping each other. The sheet bundle transport apparatus 100 has a function of rotating only a desired sheet bundle B out of the plurality of sheet bundles B so that the desired sheet bundle B is angled with respect to the width direction WD and thereby performing division of the plurality of sheet bundles B.

As illustrated in Fig. 1 to Fig. 4, the sheet bundle transport apparatus 100 of the present embodiment has a transport mechanism 10, a press mechanism 20, a motion mechanism 30, a sheet bundle support unit 40, and a control unit 50.

The transport mechanism 10 is a mechanism that transports the plurality of sheet bundles B carried in from the sheet bundle carry-in apparatus 200 to the sheet bundle accumulation apparatus 300 arranged downstream in the transport direction TD. The transport mechanism 10 has a first transport unit 11 and a second transport unit 12. The first transport unit 11 and the second transport unit 12 each are a device that is formed extending in the transport direction TD and transports the plurality of sheet bundles B in the transport direction TD with the sheet bundles B overlapping each other. As illustrated in Fig. 1 and Fig. 4, the second transport unit 12 is arranged spaced apart from the first transport unit 11 in the width direction WD that is orthogonal to the transport direction TD.

As illustrated in Fig. 1 and Fig. 2, the first transport unit 11 has a first driving roller 11a that generates drive force for rotation about a first drive shaft 11a1, a first driven roller 11b, and a first transport belt 11c stretched around the first driving roller 11a and the first driven roller 11b. The first driving roller 11a generates drive force by motive power transferred from a drive motor (not illustrated) controlled by the control unit 50.

As illustrated in Fig. 1 and Fig. 3, the second transport unit 12 has a second driving roller 12a that generates drive force for rotation about a second drive shaft 12a1, a second driven roller 12b, and a second transport belt 12c stretched around the second driving roller 12a and the second driven roller 12b. The second driving roller 12a generates drive force by motive power transferred from a drive motor (not illustrated) controlled by the control unit 50.

The press mechanism 20 is a mechanism that presses the plurality of sheet bundles B transported in the transport direction TD by the transport mechanism 10 against the transport mechanism 10 from above the sheet bundles B. The press mechanism 20 has a first press unit 21, a second press unit 22, an abutment unit 23, and a press switching unit 24.

As illustrated in Fig. 2, the first press unit 21 has a downstream press roller (first press roller) 21a, an upstream press roller (first press roller) 21b, and a first press belt 21c. The first press belt (first rotating member) 21c is stretched around the downstream press roller 21a and the upstream press roller 21b. The first press unit 21 is arranged above the first transport unit 11 in the height direction HD with the plurality of sheet bundles B being interposed therebetween and presses the sheet bundles B against the first transport belt 11c of the first transport unit 11 via the first press belt 21c that is rotatable about a first rotary shaft 21a1 extending in the width direction WD.

As illustrated in Fig. 3, the second press unit 22 has a downstream press roller (second press roller) 22a, an upstream press roller (second press roller) 22b, and a second press belt 22c. The second press belt (second rotating member) 22c is stretched around the downstream press roller 22a and the upstream press roller 22b. The second press unit 22 is arranged above the second transport unit 12 in the height direction HD with the plurality of sheet bundles B being interposed therebetween and presses the sheet bundle B against the second transport belt 12c of the second transport unit 12 via the second press belt 22c that is rotatable about a second rotary shaft 22a1 extending in the width direction WD.

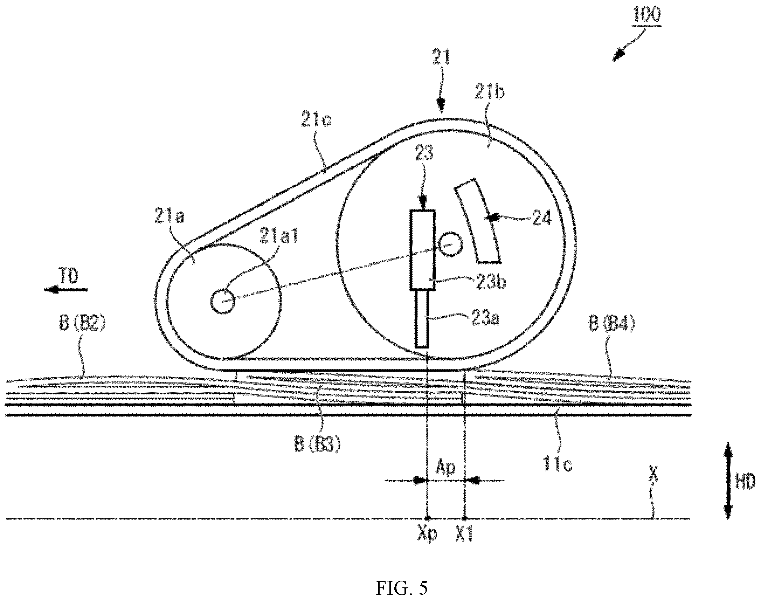

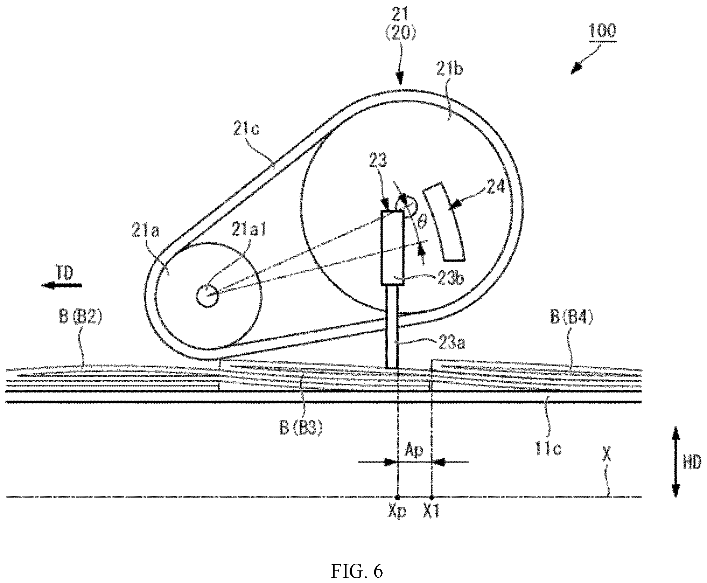

The abutment unit 23 and the press switching unit 24 of the press mechanism 20 will now be described with reference to Fig. 5 and Fig. 6. Fig. 5 is a partial enlarged view of the sheet bundle transport apparatus 100 illustrated in Fig. 2 and illustrates a case where a non-abutment state and a first press state are applied. Fig. 6 is a partial enlarged view of the sheet bundle transport apparatus 100 illustrated in Fig. 2 and illustrates a case where an abutment state and a second press state are applied. The axis X illustrated in Fig. 5 and Fig. 6 is an axis running in the transport direction TD.

As illustrated in Fig. 5 and Fig. 6, the abutment unit 23 is a mechanism that vertically moves an abutment member 23a to perform switching between the abutment state (Fig. 6) where the end of the sheet bundle B is abutted against the abutment member 23a at a predetermined position in the transport direction TD and the non-abutment state (Fig. 5) where the end of the sheet bundle B is not abutted against the abutment member 23a at the predetermined position. As illustrated in Fig. 1, the abutment unit 23 is arranged between the first transport unit 11 and the second transport unit 12 with respect to the width direction WD.

As illustrated in Fig. 5 and Fig. 6, the abutment unit 23 has the abutment member 23a formed axially extending in the height direction HD and a drive mechanism 23b that vertically moves the abutment member 23a in the height direction HD. The drive mechanism 23b is fixed to the motion mechanism 30 so that the position of the drive mechanism 23b in the height direction HD relative to the first transport unit 11 is constant.

The drive mechanism 23b moves the abutment member 23a so that, in the non-abutment state illustrated in Fig. 5, the bottom end of the abutment member 23a is at a position not in contact with any sheet bundle B. The drive mechanism 23b moves the abutment member 23a so that, in the abutment state illustrated in Fig. 6, the bottom end of the abutment member 23a is at a position in contact with a sheet bundle B.

The press switching unit 24 is a mechanism that swings the upstream press roller 21b about the first rotary shaft 21a1 so as to perform switching between the first press state illustrated in Fig. 5 and the second press state illustrated in Fig. 6. The press switching unit 24 is fixed to the motion mechanism 30. As illustrated in Fig. 5, the first press state is a state where the first press unit 21 and the second press unit 22 press the sheet bundle B in a predetermined region Ap located upstream in the transport direction TD from a predetermined position Xp in the transport direction TD at which the abutment member 23a is arranged. As illustrated in Fig. 6, the second press state is a state where the first press unit 21 does not press the sheet bundle B in the predetermined region Ap and the second press unit 22 presses the sheet bundle B in the predetermined region Ap.

The predetermined region Ap is a region from the predetermined position Xp, which is the upstream end in the transport direction TD of the abutment member 23a, to the position X1, which is the upstream end in the transport direction TD of the region where the first press unit 21 and the second press unit 22 press the sheet bundle B.

The press switching unit 24 switches the first press state illustrated in Fig. 5 to the second press state illustrated in Fig. 6 by swinging the upstream press roller 21b by an angle θ about the first rotary shaft 21a1. As illustrated in Fig. 5, in the first press state, the press switching unit 24 forms a state where both the downstream press roller 21a and the upstream press roller 21b press the sheet bundle B via the first press belt 21c.

As illustrated in Fig. 6, in the second press state, the press switching unit 24 forms a state where only the downstream press roller 21a arranged downstream in the transport direction TD presses the sheet bundle B via the first press belt 21c. In the second press state, the press switching unit 24 forms a state where the upstream press roller 21b arranged upstream in the transport direction TD does not press the sheet bundle B and the upstream press roller 22b presses, via the second press belt 22c, the sheet bundle B located upstream from the predetermined position Xp in the transport direction TD at which the abutment member 23a is arranged.

The operation of the press switching unit 24 to switch the first press state to the second press state is performed by the control unit 50 in synchronization with the operation of the abutment unit 23 to switch the non-abutment state to the abutment state. Note that the motive power source for the operation of the press switching unit 24 to switch the first press state to the second press state and the motive power source for the operation of the abutment unit 23 to switch the non-abutment state to the abutment state can be the same (for example, a single electric motor).

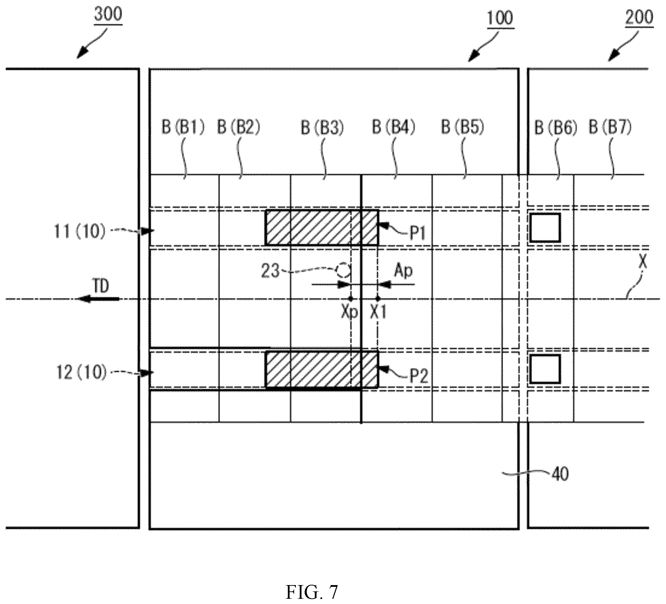

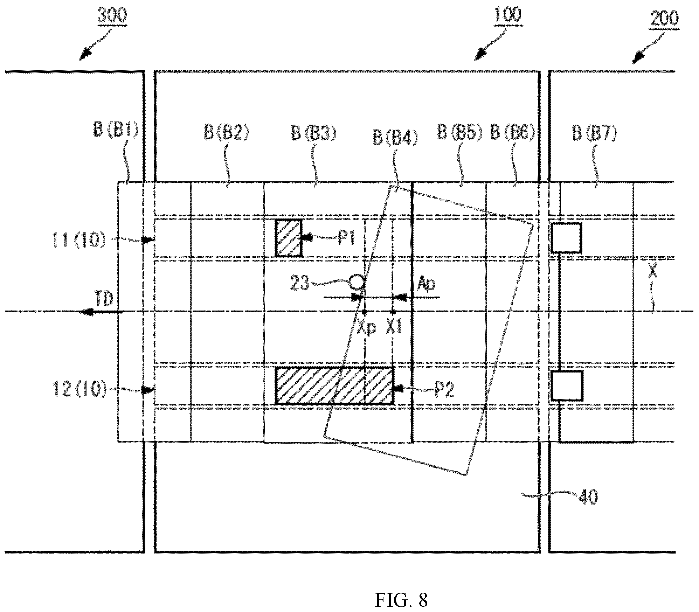

The transport state of the sheet bundle B will now be described with reference to Fig. 7 and Fig. 8. Fig. 7 is a plan view of the sheet bundle transport apparatus 100 according to one embodiment of the present invention when viewed from above and illustrates a case where the non-abutment state and the first press state are applied. Fig. 8 is a plan view of the sheet bundle transport apparatus 100 according to one embodiment of the present invention when viewed from above and illustrates a case where the abutment state and the second press state are applied. In Fig. 7 and Fig. 8, depiction of the press mechanism 20 is omitted, a region in which the first press unit 21 presses the sheet bundle B is denoted as a first press region P1, and a region in which the second press unit 22 presses the sheet bundle B is denoted as a second press region P2.

As illustrated in Fig. 7, when the first press state is applied, the first press unit 21 presses the sheet bundle B in the predetermined region Ap located upstream from the predetermined position Xp in the transport direction TD, and the second press unit 22 presses the sheet bundle B in the predetermined region Ap located upstream from the predetermined position Xp in the transport direction TD. In Fig. 7, since the abutment unit 23 is in the non-abutment state, the sheet bundle B located upstream from the abutment unit 23 in the transport direction TD passes by the abutment unit 23 without being abutted against the abutment member 23a.

As illustrated in Fig. 8, when the second press state is applied, the first press unit 21 does not press the sheet bundle B in the predetermined region Ap located upstream from the predetermined position Xp in the transport direction TD, and the second press unit 22 presses the sheet bundle B in the predetermined region Ap located upstream from the predetermined position Xp in the transport direction TD. In Fig. 8, since the abutment unit 23 is in the abutment state, the sheet bundle B located upstream from the abutment unit 23 in the transport direction TD is abutted against the abutment member 23a and rotated about the abutment unit 23 in response to transport force in the transport direction TD being applied by the second press unit 22.

The motion mechanism 30 is a mechanism that moves the press mechanism 20 in the transport direction TD to a particular position. After moving the press mechanism 20 in the transport direction TD to a particular position, the motion mechanism 30 can form a state where the position in the transport direction TD of the press mechanism 20 is fixed. In the press mechanism 20, relative positions in the transport direction TD between the abutment unit 23, the first press unit 21, and the second press unit 22 are maintained to be constant. Therefore, the motion mechanism 30 can move the abutment unit 23, the first press unit 21, and the second press unit 22 in the transport direction TD while maintaining the relative positions therebetween in the transport direction TD.

The sheet bundle support unit 40 is a member arranged to form a support face that matches the top faces of the first transport unit 11 and the second transport unit 12 in the height direction HD. As illustrated in Fig. 1, the sheet bundle support unit 40 is arranged in the region between the first transport unit 11 and the second transport unit 12 with respect to the width direction WD, the side region of the first transport unit 11, and the side region of the second transport unit 12. The sheet bundle support unit 40 forms a transport face for transporting the plurality of sheet bundles B in cooperation with the first transport unit 11 and the second transport unit 12.

The control unit 50 is a device that controls each unit of the sheet bundle transport apparatus 100. The control unit 50 controls the abutment unit 23 and the press switching unit 24 to switch the abutment unit 23 from the non-abutment state to the abutment state and switch the press mechanism 20 from the first press state to the second press state so as to change the angle with respect to the width direction WD of a predetermined sheet bundle B out of the plurality of continuously transported sheet bundles B.

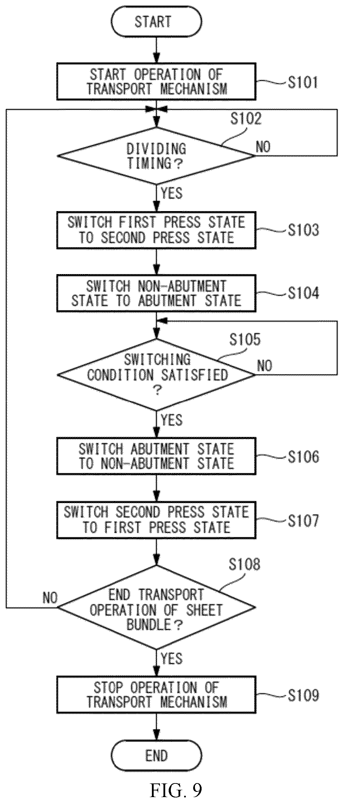

The control method of the sheet bundle transport apparatus 100 performed by the control unit 50 will now be described with reference to Fig. 9. Fig. 9 is a flowchart illustrating a control method of the sheet bundle transport apparatus 100 according to one embodiment of the present invention. The process of each step illustrated in Fig. 9 is performed when the control unit 50 executes a control program stored in a storage unit (not illustrated).

In step S101, the control unit 50 starts an operation of the transport mechanism 10 to transport a plurality of sheet bundles B in the transport direction TD. The first transport unit 11 and the second transport unit 12 of the transport mechanism 10 accept the plurality of sheet bundles B carried in from the sheet bundle carry-in apparatus 200 and start an operation to transport the sheet bundles B to the sheet bundle accumulation apparatus 300 arranged downstream in the transport direction TD.

In step S102, the control unit 50 determines whether or not it is a dividing timing and proceeds with the process to step S103 if the determination is YES or repeats the determination of S102 if the determination is NO. In response to a predefined number of sheet bundles B having passed by the predetermined position Xp, the control unit 50 determines YES and proceeds with the process to step S103.

In step S103, the control unit 50 controls the press mechanism 20 to switch the first press state to the second press state. For example, in response to three sheet bundles B1, B2, B3 illustrated in Fig. 7 having passed by the predetermined position Xp, the control unit 50 controls the press switching unit 24 to switch the first press state to the second press state. The press switching unit 24 swings the upstream press roller 21b by an angle θ about the first rotary shaft 21a1 and thereby switches the first press state illustrated in Fig. 5 to the second press state illustrated in Fig. 6.

In step S104, the control unit 50 controls the abutment unit 23 to switch the non-abutment state to the abutment state. For example, in response to the three sheet bundles B 1, B2, B3 illustrated in Fig. 7 having passed by the predetermined position Xp, the control unit 50 controls the abutment unit 23 to switch the non-abutment state to the abutment state.

In step S105, the control unit 50 determines whether or not a switching condition about the switching from the abutment state to the non-abutment state is satisfied after the first press state has been switched to the second press state and the non-abutment state has been switched to the abutment state, and the control unit 50 proceeds with the process to step S106 if the determination is YES or repeats the process of step S105 if the determination is NO. Herein, the switching condition is set in accordance with the extent of the angle by which the sheet bundle B whose end is abutted against the abutment member 23a is to be angled with respect to the width direction WD.

For example, the switching condition is a condition as to whether or not the moving amount by which the first transport belt 11c of the first transport unit 11 and the second transport belt 12c of the second transport unit 12 have moved in the transport direction TD reaches a predetermined amount. Further, the switching condition is a condition as to whether or not the sheet bundle B (the sheet bundle B5 in Fig. 8) transported subsequent to the sheet bundle B (the sheet bundle B4 in Fig. 8) whose end is abutted against the abutment member 23a reaches a predetermined position located upstream from the abutment member 23a in the transport direction TD. Further, the switching condition may be other conditions different from the above as long as it is a condition to form a state where the sheet bundle B whose end is abutted against the abutment member 23a is angled by a predetermined angle with respect to the width direction WD.

In step S106, the control unit 50 controls the abutment unit 23 to switch the abutment state to the non-abutment state. For example, in response to rotation of the sheet bundle B4 about the abutment member 23a as illustrated in Fig. 8, the control unit 50 controls the abutment unit 23 to switch the abutment state to the non-abutment state.

In step S107, the control unit 50 controls the press mechanism 20 to switch the second press state to the first press state. For example, in response to rotation of the sheet bundle B4 about the abutment member 23a as illustrated in Fig. 8, the control unit 50 controls the press mechanism 20 to switch the second press state to the first press state.

In step S108, the control unit 50 determines whether or not to end the transport operation for the plurality of sheet bundles B and proceeds with the process to step S 109 if the determination is YES or repeats the process of step S 102 and the subsequent steps if the determination is NO.

In step S109, the control unit 50 stops the operation of the transport mechanism 10 to transport the plurality of sheet bundles B in the transport direction TD and ends the process of the present flowchart.

The effects and advantages achieved by the sheet bundle transport apparatus 100 of the present embodiment described above will be described.

According to the sheet bundle transport apparatus 100 of the present embodiment, the abutment unit 23 is set to the non-abutment state, the press switching unit 24 is set to the first press state, thereby the first press unit 21 presses the sheet bundle B against the first transport unit 11 in the predetermined region Ap without the sheet bundle B being abutted against the abutment member 23a, and the second press unit 22 presses the sheet bundle B against the second transport unit 12 in the predetermined region Ap. Thus, each of the plurality of sheet bundles B receives application of transport force toward the transport direction TD from the first transport unit 11 and the second transport unit 12 and is transported in the transport direction TD.

Further, according to the sheet bundle transport apparatus 100 of the present embodiment, the abutment unit 23 is switched from the non-abutment state to the abutment state, the press mechanism 20 is switched from the first press state to the second press state, and thereby the second press unit 22 presses the sheet bundle B against the second transport unit 12 in the predetermined region Ap with the sheet bundle B being abutted against the abutment member 23a. Since the sheet bundle B abutted against the abutment member 23a is pressed against the second transport unit 12 by the second press unit 22, the sheet bundle B is rotated about the abutment member 23a by the transport force transferred from the second transport unit 12 and stably rotated to a desired orientation.

As described above, according to the sheet bundle transport apparatus 100 of the present embodiment, when the plurality of sheet bundles B transported in a partially overlapping state are divided, the sheet bundles B for division can be stably rotated to a desired orientation to perform suitable division of the sheet bundles B.

According to the sheet bundle transport apparatus 100 of the present embodiment, the transport force of the first transport unit 11 is transferred to the first press belt 21c via the sheet bundle B pressed by the downstream press roller 21a arranged downstream in the transport direction TD. The first press belt 21c rotated by transport force of the first transport unit 11 can apply transport force to the sheet bundle B pressed by the upstream press roller 21b arranged upstream in the transport direction TD.

Similarly, according to the sheet bundle transport apparatus 100 of the present embodiment, the transport force of the second transport unit 12 is transferred to the second press belt 22c via the sheet bundle B pressed by the downstream press roller 22a arranged downstream in the transport direction TD. The second press belt 22c rotated by the transport force of the second transport unit 12 can apply the transport force to the sheet bundle B pressed by the upstream press roller 22b arranged upstream in the transport direction TD.

According to the sheet bundle transport apparatus 100 of the present embodiment, in the first press state, a state where both the downstream press roller 21a and the upstream press roller 21b press the sheet bundle B via the first press belt 21c is formed, and thereby transport force can be applied to the plurality of sheet bundles B from the first transport unit 11 in the entire region between the downstream press roller 21a and the upstream press roller 21b in the transport direction TD. Further, in the second press state, a state where only the downstream press roller 21a arranged downstream in the transport direction TD presses the sheet bundle B via the first press belt 21c is formed, and thereby a state where the sheet bundle B located upstream from the predetermined position Xp in the transport direction TD at which the abutment member 23a is arranged is suitably rotated about the abutment member 23a can be formed.

According to the sheet bundle transport apparatus 100 of the present embodiment, while maintaining the relative positions in the transport direction TD between the abutment unit 23, the first press unit 21, and the second press unit 22, it is possible to move these units to any position in the transport direction TD in accordance with the size or the like of the sheet bundle B.

According to the sheet bundle transport apparatus 100 of the present embodiment, the first transport belt 11c can be rotated by the drive force of the first driving roller 11a to apply the transport force to the sheet bundle B, and the second transport belt 12c can be rotated by the drive force of the second driving roller 12a to apply the transport force to the sheet bundle B.

## Claims

1. A sheet bundle transport apparatus (100) comprising:
a first transport unit (11) formed extending in a transport direction (TD) and configured to transport a plurality of sheet bundles in the transport direction (TD);
a second transport unit (12) arranged spaced apart from the first transport unit (11) in a width direction (WD) orthogonal to the transport direction (TD), formed extending in the transport direction (TD), and configured to transport the plurality of sheet bundles in the transport direction (TD);
an abutment unit (23) arranged between the first transport unit (11) and the second transport unit (12) with respect to the width direction (WD) and configured to vertically move an abutment member (23a) to perform switching between an abutment state and a non-abutment state, the abutment state being a state where an end of a sheet bundle of the sheet bundles is abutted against the abutment member (23a) at a predetermined position in the transport direction (TD), and the non-abutment state being a state where the end of the sheet bundle is not abutted against the abutment member (23a) at the predetermined position;
a first press unit (21) arranged above the first transport unit (11) with the sheet bundle being interposed between the first transport unit (11) and the first press unit (21) and configured to press the sheet bundle against the first transport unit (11) via a first rotating member (21c) that is rotatable about a first rotary shaft extending in the width direction (WD);
a second press unit (22) arranged above the second transport unit (12) with the sheet bundle being interposed between the second transport unit (12) and the second press unit (22) and configured to press the sheet bundle against the second transport unit (12) via a second rotating member (22c) that is rotatable about a second rotary shaft extending in the width direction (WD);
a press switching unit (24) configured to perform switching between a first press state and a second press state, the first press state being a state where the first press unit (21) and the second press unit (22) press the sheet bundle in a predetermined region located upstream from the predetermined position in the transport direction (TD), and the second press state being a state where the first press unit (21) does not press the sheet bundle in the predetermined region and the second press unit (22) presses the sheet bundle in the predetermined region; and
a control unit (50) configured to control the abutment unit (23) and the press switching unit (24) to switch the non-abutment state to the abutment state and switch the first press state to the second press state so as to change an angle relative to the width direction (WD) of a predetermined sheet bundle out of the plurality of sheet bundles being continuously transported.

2. The sheet bundle transport apparatus (100) according to claim 1,
wherein the first press unit (21) has a pair of first press rollers (21a, 21b) and a first press belt (21c) stretched around the pair of first press rollers (21a, 21b), and
wherein the second press unit (22) has a pair of second press rollers (22a, 22b) and a second press belt (22c) stretched around the pair of second press rollers (22a, 22b).

3. The sheet bundle transport apparatus (100) according to claim 2, wherein in the first press state, the press switching unit (24) forms a state where both of the pair of first press rollers (21a, 21b) press the sheet bundle via the first press belt (21c), and in the second press state, the press switching unit (24) forms a state where the first press roller (21a, 21b) arranged upstream in the transport direction (TD) does not press the sheet bundle and the second press roller (22a, 22b) presses, via the second press belt (22c), the sheet bundle located upstream from the predetermined position in the transport direction (TD) at which the abutment member (23a) is arranged.

4. The sheet bundle transport apparatus (100) according to claim 1 or 2 further comprising a motion mechanism (30) configured to move the abutment unit (23), the first press unit (21), and the second press unit (22) in the transport direction (TD) while maintaining relative positions in the transport direction (TD) between the abutment unit (23), the first press unit (21), and the second press unit (22).

5. A control method of a sheet bundle transport apparatus (100), wherein the sheet bundle transport apparatus (100) has
a first transport unit (11) formed extending in a transport direction (TD) and configured to transport a plurality of sheet bundles in the transport direction (TD),
a second transport unit (12) arranged spaced apart from the first transport unit (11) in a width direction (WD) orthogonal to the transport direction (TD), formed extending in the transport direction (TD), and configured to transport the plurality of sheet bundles in the transport direction (TD),
an abutment unit (23) arranged between the first transport unit (11) and the second transport unit (12) with respect to the width direction (WD) and configured to vertically move an abutment member (23a) to perform switching between an abutment state and a non-abutment state, the abutment state being a state where an end of a sheet bundle of the sheet bundles is abutted against the abutment member (23a) at a predetermined position in the transport direction (TD), and the non-abutment state being a state where the end of the sheet bundle is not abutted against the abutment member (23a) at the predetermined position,
a first press unit (21) arranged above the first transport unit (11) with the sheet bundle being interposed between the first transport unit (11) and the first press unit (21) and configured to press the sheet bundle against the first transport unit (11) via a first rotating member (21c) that is rotatable about a first rotary shaft extending in the width direction (WD),
a second press unit (22) arranged above the second transport unit (12) with the sheet bundle being interposed between the second transport unit (12) and the second press unit (22) and configured to press the sheet bundle against the second transport unit (12) via a second rotating member (22c) that is rotatable about a second rotary shaft extending in the width direction (WD), and
a press switching unit (24) configured to perform switching between a first press state and a second press state, the first press state being a state where the first press unit (21) and the second press unit (22) press the sheet bundle in a predetermined region located upstream from the predetermined position in the transport direction (TD), and the second press state being a state where the first press unit (21) does not press the sheet bundle in the predetermined region and the second press unit (22) presses the sheet bundle in the predetermined region,
the control method comprising:
a first switching step (S103, S104) of controlling the abutment unit (23) and the press switching unit to switch the non-abutment state to the abutment state and switch the first press state to the second press state so as to change an angle relative to the width direction (WD) of a predetermined sheet bundle out of the plurality of sheet bundles being continuously transported; and
a second switching step (S106, S107) of controlling the abutment unit (23) and the press switching unit (24) to switch the abutment state to the non-abutment state and switch the second press state to the first press state.

6. The control method of a sheet bundle transport apparatus (100) according to claim 5,
wherein the first press unit (21) has a pair of first press rollers (21a, 21b) and a first press belt (21c) stretched around the pair of first press rollers (21a, 21b), and
wherein the second press unit (22) has a pair of second press rollers (22a, 22b) and a second press belt (22c) stretched around the pair of second press rollers (22a, 22b).

7. The control method of a sheet bundle transport apparatus (100) according to claim 6, wherein in the first press state, the press switching unit (24) forms a state where both of the pair of first press rollers (21a, 21b) press the sheet bundle via the first press belt (21c), and in the second press state, the press switching unit (24) forms a state where the first press roller (21a, 21b) arranged upstream in the transport direction (TD) does not press the sheet bundle and the second press roller (22a, 22b) presses, via the second press belt (21c), the sheet bundle located upstream from the predetermined position in the transport direction (TD) at which the abutment member (23c) is arranged.

8. The control method of a sheet bundle transport apparatus (100) according to claim 5 or 6 further comprising a moving step of moving the abutment unit (23), the first press unit (21), and the second press unit (22) in the transport direction (TD) while maintaining relative positions in the transport direction (TD) between the abutment unit (23), the first press unit (21), and the second press unit (22).
